(19) Europäisches Patentamt
European Patent Office
Office européen des brevets

(11) **EP 3 819 252 B1**

(12) **EUROPEAN PATENT SPECIFICATION**

(45) Date of publication and mention
of the grant of the patent:
**07.06.2023 Bulletin 2023/23**

(21) Application number: **19208163.6**

(22) Date of filing: **08.11.2019**

(51) International Patent Classification (IPC):
***B66B 25/00*** *(2006.01)*

(52) Cooperative Patent Classification (CPC):
**B66B 25/006**

(54) **MONITORING SYSTEMS FOR INCLINED PASSENGER CONVEYORS**

ÜBERWACHUNGSSYSTEME FÜR GENEIGTE PERSONENFÖRDERER

SYSTÈMES DE SURVEILLANCE DE TRANSPORTEURS DE PASSAGERS INCLINÉS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**12.05.2021 Bulletin 2021/19**

(73) Proprietor: **OTIS Elevator Company
Farmington, CT 06032 (US)**

(72) Inventor: **PAHLKE, Derk Oscar
14055 Berlin (DE)**

(74) Representative: **Dehns
St. Bride's House
10 Salisbury Square
London EC4Y 8JD (GB)**

(56) References cited:
CN-A- 102 942 102     CN-A- 110 294 398
JP-A- 2007 161 440     JP-A- 2015 093 769

**Description**

Technical field

This disclosure relates to monitoring systems for inclined passenger conveyors, such as escalators or moving walkways, and methods for monitoring inclined passenger conveyors.

Background

Conventional inclined passenger conveyors, such as escalators and inclined moving walkways, generally comprise a transportation band, on which passengers stand, which is propelled by a drive system to convey the passengers from one place to another place at a higher or lower vertical elevation (e.g. between floors of a building) in a conveyance direction. The transportation band comprises a set of transportation elements which are connected to form a circulating endless band. The transportation elements are drivingly coupled to a drive belt or drive chain which is driven by at least one motor. The passengers are transported along a path which normally comprises an inclined region and non-inclined landing regions at the ends which facilitate passenger embarkation or disembarkation.

Escalators transport passengers between a lower landing region and an upper landing region. Escalators typically comprise an endless transportation band formed from a plurality of mutually connected step bodies. The transportation band is mounted on a drive belt or chain belt, which is driven about an upper reversal point at the upper landing region and a lower reversal point at the lower landing region.

Moving walkways are typically one of two types, either a pallet type or a moving belt type. A moving belt type moving walkway typically includes an endless transportation band formed of a metal mesh or rubber belt disposed over a series of rollers and driven by a motor around two reversal points. A pallet type moving walkway typically includes a continuous series of pallets joined together to form a transportation band. Inclined moving walkways transport passengers over a vertical distance between a lower landing region and an upper landing region. Moving walkways can transport passengers over extended distances, and inclined sections can be provided within extended moving walkways.

Escalators and moving walkways are often provided with fault detection sensors which are configured to detect issues such as, but not limited to, friction, noise or component faults.

Condition Based Maintenance (CBM) is a form of predictive maintenance, in which sensor(s) are used to measure the operating conditions and/or status. Fault detection sensors produce data which can be collated and analysed to establish trends, predict failure, and calculate remaining operational life. It is known to use CBM techniques on escalators and inclined moving walkways.

However, in all of these situations, it is difficult to accurately identify the location of a detected fault or issue.

CN 110 294 398 A describes an escalator remote monitoring control system.

Summary

According to a first aspect of the invention, there is provided a monitoring system for an inclined passenger conveyor as claimed in claim 1.

The term moveable component is understood to include the components which during normal operation move in a conveyance direction (either upwards or downwards) to transport passengers and return in an opposite, return direction. In other words, the term moveable component includes all components which during normally operation are displaced vertically. The term transportation band is understood to comprise a plurality of transportation elements which are connected to form a circulating endless band.

The at least one fault detection sensor may be provided on one of: the transportation band, the endless drive member or the moving handrail. The at least one fault detection sensor may be provided on any component of the inclined passenger conveyor which is displaced vertically during normal operation of the inclined passenger conveyor.

At least one fault detection sensor may be an acceleration sensor. At least one fault detection sensor may be a microphone. At least one fault detection sensor may be configured to detect vibration. At least one fault detection sensor may be configured to detect alignment and/or misalignment of the transportation band. At least one fault detection sensor may be a temperature sensor. At least one fault detection sensor may be an electrical current sensor.

The determined fault status may be one or more of the following: wear, bearing failure, dirt, lack of lubrication, misalignment of components.

The barometric pressure at the first defined vertical height may be provided by the associated barometric pressure sensor. The first defined vertical height may be a maximum vertical height or a minimum vertical height of the associated barometric pressure sensor. The first defined vertical height may correspond to a turning point of the associated barometric pressure sensor.

The first stationary pressure sensor may be provided at the lower landing region or the upper landing region. Stationary pressure sensors may be provided at both the upper landing region and the lower landing region.

The controller may be further configured to receive data relating to a barometric pressure at a second defined vertical height. The controller may be further configured to calculate the vertical height of the associated pressure sensor based on comparisons between: the barometric pressure at the first defined vertical height and the instantaneous barometric pressure at the location of the fault data; and the barometric pressure at the second defined vertical height and the instantaneous barometric pressure at the location of the fault data

The barometric pressure at the second defined vertical height may be provided by the associated barometric pressure sensor. The second defined vertical height is different to the first defined vertical height, and may the other of the maximum vertical height or the minimum vertical height of the associated barometric pressure sensor. The second defined vertical height may correspond to the other turning point of the associated barometric pressure sensor.

A second stationary pressure sensor may be provided at the other of the lower landing region and the upper landing region. The controller may further be configured to receive data from the second stationary pressure sensor. The controller may further be configured to calculate the vertical height of the associated pressure sensor based on comparisons between: the first stationary pressure sensor data and the associated pressure sensor data; and the second stationary pressure sensor data and the associated pressure sensor data.

The controller may further be configured to determine whether the fault detection sensor is moving in an upwards direction or a downwards direction. The determination of moving direction may comprise receiving data from an acceleration sensor mounted on a moveable component of the inclined passenger conveyor. The determination of moving direction may comprise receiving data from an acceleration sensor mounted on the transportation band, the moving handrail or the drive member. The step of determining a location of the determined fault status may be based on the calculated vertical height and the determined moving direction. Additionally or alternatively, the determination of moving direction may comprise analysing data from one or more of the associated barometric pressure sensors can also be analysed to determine a direction of movement: decreasing air pressure indicates upwards movement, and increasing air pressure indicates downwards movement. Additionally or alternatively, the determination of moving direction may comprise analysing the calculated vertical height over a time period, i.e. if the height decreases over time, the inclined passenger is determined to be travelling down.

The controller may further be configured to determine a location of the detected fault on a predetermined trajectory path, based on the determination of upwards or downwards travel direction and the calculated vertical height.

At least one fault detection sensor may be provided on the moving handrail. At least one fault detection sensor may be provided on the drive member. At least one fault detection sensor may be provided on the transportation band.

The monitoring system may further comprise a control station located remotely from the inclined passenger conveyor. The controller may further be configured to transmit data to the control station.

The control station may be integrated into a hand held device, such as a smart phone, tablet or laptop. The controller may be configured for wireless communication with the control station. The control station may be configured to transmit data to a hand held device, such as a smart phone, tablet or laptop.

The control station may utilise the transmitted data to predict maintenance and/or repair schedules. The control station may be configured to transmit the maintenance and/or repair schedules to a remote user.

The control station may use the transmitted data for condition based maintenance. The control station may produce an output related to maintenance and/or repair. The control station output may be transmitted to an operator, located remotely from the control station.

According to a further aspect, there is provided an inclined passenger conveyor comprising a monitoring system as described above.

The inclined passenger conveyor may be an escalator. The transportation band may be a plurality of mutually connected step bodies. The inclined passenger conveyor may be a moving walkway. The transportation band may be a pallet band, comprising a continuous series of pallets joined together. The endless drive member may be a belt drive or a chain drive.

Acceleration sensors which are configured to detect vibrations or misalignment of transportation elements can be provided on the transportation band. When abnormal vibrations are detected on the transportation band, this is generally an indication of issues or problems with the operation, such as, but not limited to, wear, bearing failure, dirt, lack of lubrication, or step/pallet misalignment.

Accelerations sensors which are configured to detect vibration can be provided on the moving handrail. When abnormal vibrations are detected on the moving handrail, this can be an indication of issues or problems with the operation, such as, but not limited to, sticking, dirt, or loss of pressing force.

Acceleration sensors which are configured to detect vibrations can be placed on the endless drive member. When abnormal vibrations are detected on the endless drive member, this can be an indication of issues or problems with the operation, such as, but not limited to, wear, bearing failure, dirt, or lack of lubrication.

It will be appreciated that other known fault detection sensors can be provided on the components of the inclined elevator system with an associated barometric sensor.

According to a further aspect of the invention, there is provided a method of monitoring an inclined passenger conveyor as claimed in claim 9.

The barometric pressure at the first defined vertical height may be provided by an associated barometric pressure sensor provided adjacent to and associated with the one or more fault detection sensors. The first defined vertical height may be a maximum vertical height or a minimum vertical height of the associated barometric pressure sensor. The first defined vertical height may correspond to a turning point of the associated barometric pressure sensor.

The term moveable component is understood to include the components which during normal operation move in a conveyance direction to transport passengers and in a return direction.

The step of receiving fault data may include receiving fault data from at least one fault detection sensor provided on one of: the transportation band, the endless drive member or the handrail.

At least one fault detection sensor may be an acceleration sensor. At least one fault detection sensor may be a microphone. At least one fault detection sensor may be configured to detect vibration. At least one fault detection sensor may be configured to detect alignment and/or misalignment of the transportation band. At least one fault detection sensor may be a temperature sensor. At least one fault detection sensor may be an electrical current sensor.

The determined fault status may be one or more of the following: wear, bearing failure, dirt, lack of lubrication, misalignment of components. At least one fault detection sensor may be an acceleration sensor provided on the transportation band. At least one fault detection sensor may be configured to detect vibrations or misalignment of transportation elements of the transportation band. When abnormal vibrations are detected on the transportation band, this is generally an indication of issues or problems with the operation, such as, but not limited to, wear, bearing failure, dirt, lack of lubrication, or step/pallet misalignment.

At least one fault detection sensor may be an acceleration sensor provided on the moving handrail. At least one fault detection sensor may be configured to detect vibration on the moving handrail. When abnormal vibrations are detected on the moving handrail, this can be an indication of issues or problems with the operation, such as, but not limited to, sticking, dirt, or loss of pressing force.

At least one fault detection sensor may be an acceleration sensor provided on the endless drive member. At least one fault detection sensor may be configured to detect vibrations on the endless drive member. When abnormal vibrations are detected on the endless drive member, this can be an indication of issues or problems with the operation, such as, but not limited to, wear, bearing failure, dirt, or lack of lubrication.

The first defined vertical height may be at the upper landing region or the lower landing region.

The method may further comprise receiving data relating to a barometric pressure at a second defined vertical height. The second defined vertical height may be at the other of the upper landing region or the lower landing region.

The barometric pressure at the second defined vertical height may be provided by the associated barometric pressure sensor. The second defined vertical height is different to the first defined vertical height, and may be the other of the maximum vertical height or the minimum vertical height of the associated barometric pressure sensor. The second defined vertical height may correspond to the other turning point of the associated barometric pressure sensor.

The barometric pressure at the second defined vertical height may be provided by a second stationary barometric pressure sensor. The barometric pressure at the second defined vertical height may be provided by the associated barometric pressure sensor.

The step of calculating a vertical height of the detected fault data may be based on comparisons between: the barometric pressure at the first defined vertical height and the instantaneous barometric pressure at the location of the fault data; and the barometric pressure at the second defined vertical height and the instantaneous barometric pressure at the location of the fault data.

The method may further comprise determining whether the at least one fault detection sensor is moving in an upwards direction or a downwards direction. The determination of moving direction may comprise receiving data from an acceleration sensor mounted on a moveable component of the inclined passenger conveyor. The determination of moving direction may comprise receiving data from an acceleration sensor mounted on the transportation band, the moving handrail or the drive member. The step of determining a location of the determined fault status may be based on the calculated vertical height and the determined moving direction.

Additionally or alternatively, the determination of moving direction may comprise analysing data from one or more of the associated barometric pressure sensors can also be analysed to determine a direction of movement: decreasing air pressure indicates upwards movement, and increasing air pressure indicates downwards movement.

Additionally or alternatively, the determination of moving direction may comprise analysing the calculated vertical height over a time period, i.e. if the height decreases over time, the inclined passenger is determined to be travelling down.

The method may further comprise determining a location of the detected fault on a predetermined trajectory path, based on the determination of upwards or downwards travel direction and the calculated vertical height.

The method may further comprise transmitting data to a control station located remotely from the inclined passenger conveyor. The method may further comprise wired or wireless transmission of data to a remote location.

The control station may use the transmitted data for condition based maintenance. The control station may produce an output related to maintenance and/or repair. The control station output may be transmitted to an operator, located remotely from the control station. The control station may transmit the maintenance and/or repair schedules to a remote device, such as a smart phone, tablet or laptop.

The inclined passenger conveyor may be an escalator. The transportation band may be a plurality of mutually connected step bodies. The inclined passenger conveyor may be a moving walkway. The transportation band may be a pallet band, comprising a continuous series of pallets joined together. The endless drive member may be a belt drive or a chain drive.

The monitoring system and monitoring method described provide a more accurate determination of the location of the detected fault, which has clear advantages for operational monitoring and maintenance.

The monitoring system and monitoring method described can be used in Condition based Maintenance (CBM) processes to determine health level parameters of the inclined passenger conveyor and predict maintenance and/or repair schedules. The monitoring system and monitoring method described can be used in conjunction with other known fault detection sensors provided on other components of the inclined passenger walkway.

Detailed description

Certain examples of this disclosure will now be described, by way of example only, and with reference to the accompanying drawings, in which:

Figure 1 shows an escalator according to an example of the present disclosure;

Figure 2 shows an inclined moving walkway according to an example of the present disclosure;

Figure 3 shows a schematic of a monitoring system for an inclined passenger conveyor according to an example of the present disclosure;

Figure 4 shows a schematic of a monitoring system for an inclined passenger conveyor according to an example of the present disclosure; and

Figure 5 shows a schematic representation of an exemplary method of the present disclosure.

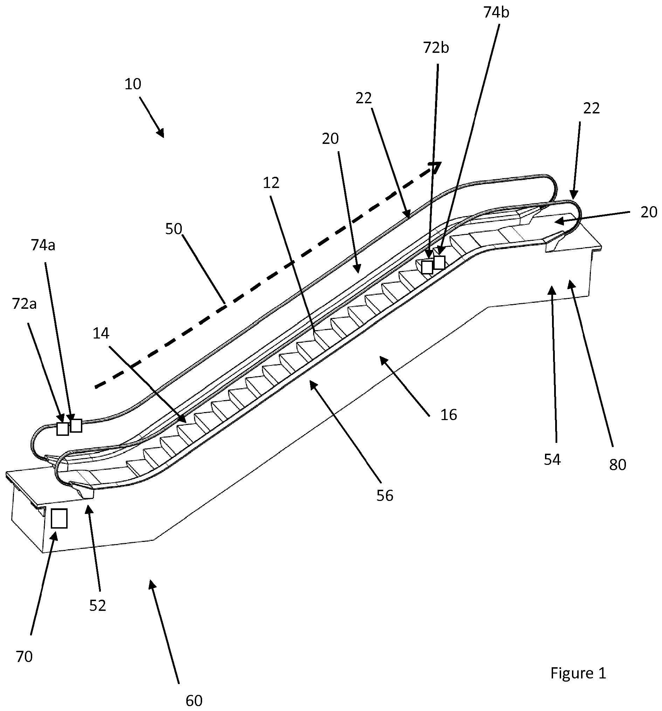

The passenger conveyor shown in Figure 1 is an escalator 10 comprising a transportation band 12 formed of a plurality of escalator steps 14. A truss 16 extends between a lower landing region 52 and an upper landing region 54. Two balustrades 20 which support moving handrails 22 extend parallel to the transportation band 12.

The transportation band 12 is coupled to a drive member (not shown in Figure 1) which may be for example a drive belt or a drive chain. The drive member is driven by a drive means (not shown), such as a drive motor.

The escalator 10 is arranged to travel in a conveyance direction 50 (represented with the dashed line arrow). In Figure 1, the conveyance direction is indicated as upwards. It will be appreciated that the escalator can also convey passengers in a reverse direction, i.e. in a downwards conveyance direction. When the escalator is operating to convey passengers upwards, the moveable components (such as the transportation band 12, the moving handrail 22 and the drive member) move in an upwards conveyance direction and a downwards return direction. When the escalator 10 is operating to convey passengers downwards, the moveable components move in a downwards conveyance direction and an upwards return direction.

The escalator 10 is provided with a monitoring system 60. The monitoring system 60 includes a first stationary barometric pressure sensor 70, a first fault detection sensor 72a with a first associated barometric pressure sensor 74a, a second fault detection sensor 72b with a second associated barometric pressure sensor 74b, and a controller 80.

The first stationary barometric pressure sensor 70 is provided in the lower landing region 52. It will be appreciated that the first stationary barometric pressure sensor 70 can be located at any known, fixed location on or near the escalator 10.

The first fault detection sensor 72a is fixed to the moving handrail 22, and the first associated barometric pressure sensor 74a is provided on the moving handrail 22, in close proximity to the first fault detection sensor 72a. The second detection fault sensor 72b is provided on one of the steps 14, and the second associated barometric pressure sensor 74b is provided on the step 14 on which the second fault sensor 74b is located, and in close proximity to the second fault detection sensor 72b.

It will be appreciated that additional fault detection sensors and associated barometric pressure sensors can be provided on any of the moveable component of the inclined passenger conveyor, for example at other locations on the moving handrail and/or on other steps 14, and/or on a drive chain/drive belt (not shown in Figure 1).

The controller 80 is provided at the upper landing region 54. It will be appreciated that the controller 80 can be located at any known location on or near the escalator 10.

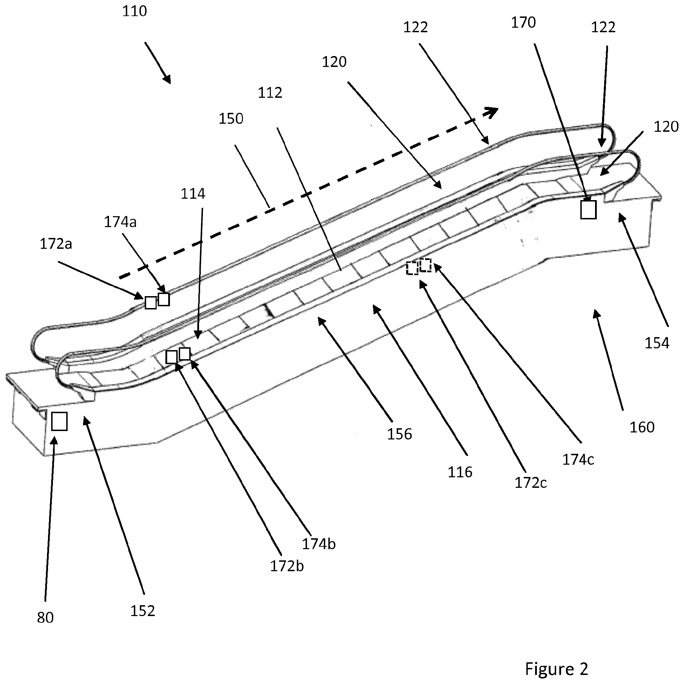

The passenger conveyor of Figure 2 is an inclined pallet type moving walkway 110. The inclined moving walkway 110 comprises a transportation band 112 formed of a plurality of pallets 114. A truss 116 extends between a lower landing region 152 and an upper landing region 154. Two balustrades 120 which support moving handrails 122 extend parallel to the transportation band 112.

The inclined moving walkway 110 is arranged to travel in a conveyance direction 150 (represented with the dashed line arrow). In Figure 2, the conveyance direction is indicated as upwards. It will be appreciated that the inclined moving walkway can also convey passengers in a reverse direction, i.e. in a downwards conveyance direction.

A monitoring system 160 includes a first stationary barometric pressure sensor 170 provided in the upper landing region 152. It will be appreciated that the first stationary barometric pressure sensor 170 can be located at any known, fixed location on or near the moving walkway 110.

A first fault detection sensor 172a is provided on the moving handrail 122, and an associated barometric pressure sensor 174a is provided on the moving handrail 122, in close proximity to the first fault detection sensor 172a.

A second fault sensor 172b is fixed on one of the pallets 114, and a second associated barometric pressure sensor 174b is provided on the pallet 114 on which the second fault sensor 172b is located, and in close proximity to the second fault detection sensor 172b.

A third fault detection sensor 172c is fixed on the drive member (not shown in the diagram), and an associated barometric pressure sensor 174c is provided on the drive member, in close proximity to the third fault detection sensor 172c.

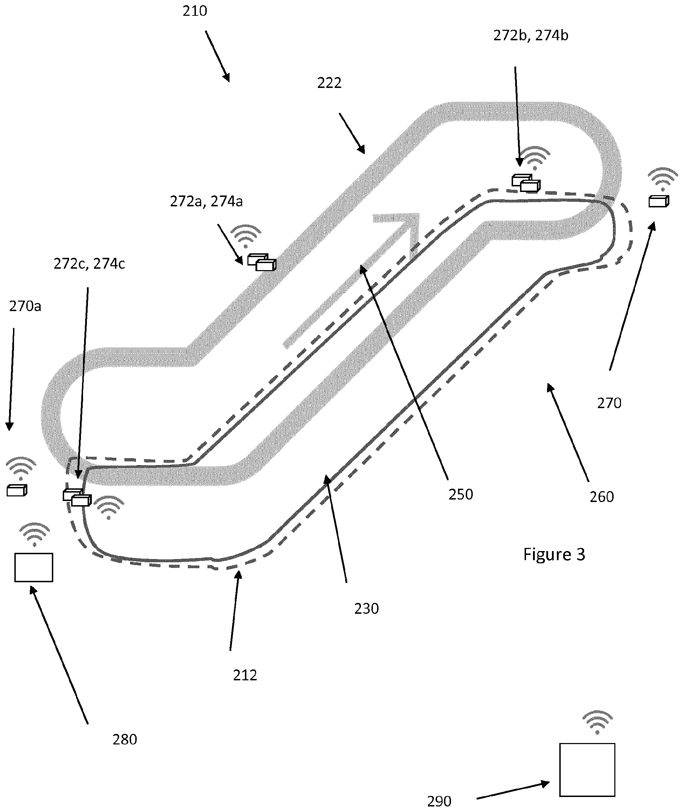

Figure 3 shows a generic representation of an inclined passenger conveyor 210, for conveying passengers in a conveyance direction 250. It will be appreciated that this could represent the escalator shown in Figure 1 or the inclined moving walkway of Figure 2. For ease of understanding, Figure 3 is a simplified, cross-sectional representation which highlights the moving components which move along the conveyance path and back along a return path.

The inclined passenger conveyor 210 includes a handrail 222, a transportation band 212 (dashed line) and a drive member 230 for driving the transportation band 212. The inclined passenger conveyor 210 is shown to be transporting passengers upwards (indicated with the arrow), in which case the handrail 222, the transportation band 212 and the endless drive member 230 (e.g. belt or chain) are all moving in a clockwise direction. It will be appreciated that the disclosure can be applied to an inclined passenger conveyor transporting passengers downwards.

A monitoring system 260 includes: a first stationary barometric pressure sensor 270 provided at the upper landing region; a second stationary barometric pressure sensor 270a provided at the lower landing region; a first fault detection sensor 272a with a first associated barometric pressure sensor 274a provided on the handrail 222; a second fault detection sensor 272b with a second associated barometric pressure sensor 274b provided on the conveyance band 212; and a third fault detection sensor 272c with a third associated barometric pressure sensor 274c provided on the drive member 230, and a controller 280.

The sensors 270, 270a, 272a, 272b, 272c, 274a, 274b, 274c are provided with a power source which could be a battery or include an energy harvesting module.

The sensors 270, 270a, 272a, 272b, 272c, 274a, 274b, 274c are configured for wireless communication with the controller 280.

The controller 280 is configured for wireless communication with a control station 290, located remotely from the passenger conveyor 210. For example, the controller 280 can be configured to electrically communicate with a cloud computing network via a network interface device. The network interface device includes any communication device (e.g., a modem, wireless network adapter, etc.) that operates according to a network protocol (e.g., Wi-Fi, Ethernet, satellite, cable communications, etc.) which establishes a wired and/or wireless communication with a cloud computing network .

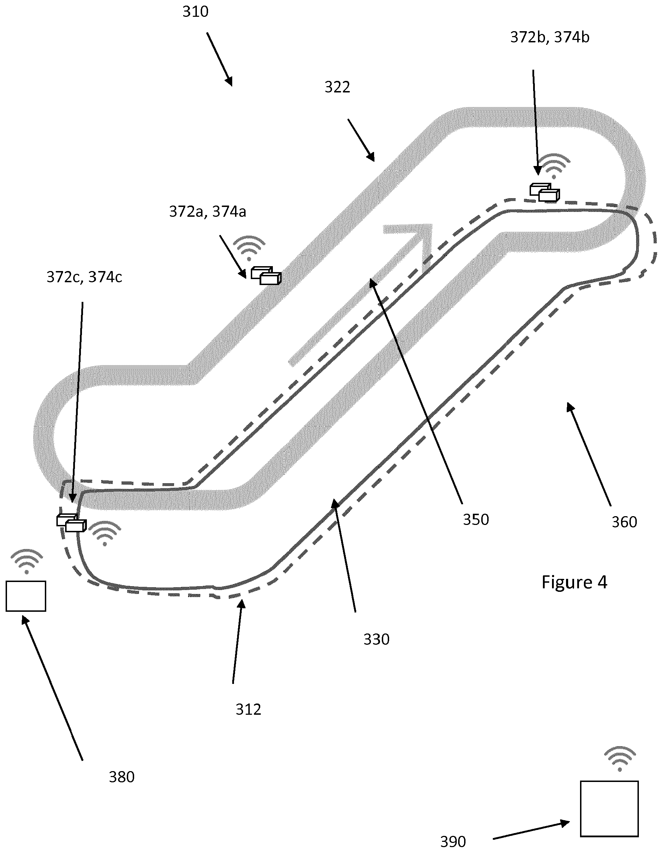

Figure 4 shows a generic representation of an inclined passenger conveyor 310 moving in a conveyance direction 250 having the same moving components as depicted in Figure 3. The inclined passenger conveyor 310 includes a handrail 322, a transportation band 312 (dashed line) a drive member 330, and a monitoring system 360. The inclined passenger conveyor 310 is shown to be transporting passengers upwards (indicated with the arrow), in which case the handrail 322, the transportation band 312 and the endless drive member 230 are all moving in an anti-clockwise direction.

The monitoring system 360 of Figure 4 includes a first fault detection sensor 372a with a first associated barometric pressure sensor 374a provided on the handrail 322; a second fault detection sensor 372b with a second associated barometric pressure sensor 374b provided on the conveyance band 312; and a third fault detection sensor 372c with a third associated barometric pressure sensor 374c provided on the drive member 330, a controller 380 and a control station 390.

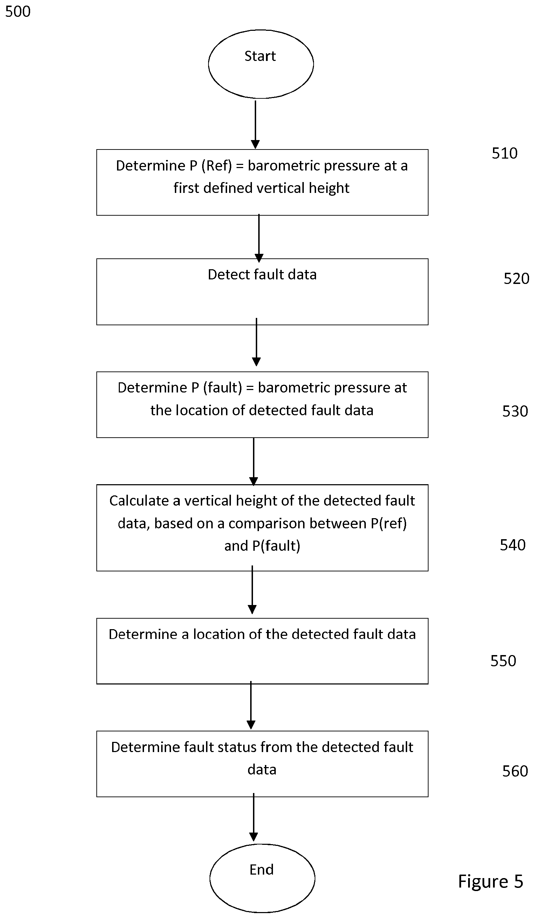

The operation of the moving handrail monitoring system will now be described with reference to the examples described above and the method 500 as schematically represented in Figure 5.

During operation of the inclined passenger conveyor, the handrail 22, 122, 222, 322 the transportation band 12, 112, 212, 312 and the endless drive member 230, 330 are driven. In the examples shown in Figures 3 and 4, the driven components move upwards in a conveyance direction, and in a downwards return direction. Fault detection sensors provided on one or more of these driven components monitor for abnormal conditions.

In the moving handrail monitoring system of Figure 3, the first stationary pressure sensor 70, 170, 270 measures a static, reference barometric pressure P(ref) at the known location of the first stationary pressure sensor (Step 510). Data from the first stationary pressure sensor 70, 170, 270 is transmitted to and received by the controller 80, 180, 280.

In the moving handrail monitoring system of Figure 4, a reference barometric pressure P(ref) is provided by one of the associated barometric pressure sensors 372a, 372b, 372c at a first defined vertical height. The reference barometric pressure P(ref) is advantageously determined at a maximum vertical height or a minimum vertical height of the associated barometric pressure sensor 372a, 372b, 372c, i.e. at a turning point corresponding to a maximum or a minimum barometric pressure reading of the associated barometric pressure sensor 372a, 372b, 372c.

Data from the or each fault detection sensor is transmitted to and received by the controller 80, 180, 280, 380 along with a barometric pressure reading P(fault) from the associated pressure sensor associated with the or each fault detection sensor (Step 520).

The or each associated pressure sensor provides a barometric pressure P(fault) reading at the location of the associated fault detection sensor. Data from the or each associated pressure sensors are transmitted to and received by the controller 80, 180, 280, 380 (Step 530).

A vertical height of the detected fault data is determined by comparison of the associated barometric pressure P(fault) with the reference barometric pressure P(ref) provided by the first stationary pressure sensor 270 or by one of the associated barometric pressure sensors 372a, 372b, 372c (step 540).

The vertical height of the detected fault data be determined using the Barometric formula below:

$$z(fault) = \frac{T(ref)}{L}\left(\left(\frac{P}{P(ref)}\right)^{\frac{-LR}{9}} - 1\right)$$

Where R is the specific gas constant = 287.053 J/(kg K), L is the atmospheric lapse rate (change in temperature divided by distance) = -6.5× 10-3 K/m, and T(ref) is the temperature at the same reference point for which P = P(ref)

A location of the detected fault status is determined using the vertical height of the fault data and the known geometry of the inclined passenger conveyor (step 550). Using the detected fault data, a fault status can be determined (step 560).

Step 540, 550 and 560 can be carried out by the controller 80, 180, 280, 280 located in the vicinity of the inclined passenger conveyor. Alternatively, some or all data from the sensors can be transmitted from the controller 80, 180, 280, 380 to the remotely located control station 290, 390 in which case some or all of steps 540, 550 and 560 are carried out at the remotely located control station 290.

In a further example, two or more reference barometric pressure readings are used. With reference to Figure 3, the first stationary barometric pressure sensor 270 provides a first reference pressure P(ref1) and the second stationary barometric pressure sensor 270a provides a second reference pressure P(ref2) at a second known vertical height. In this case the two reference pressures are used to calculate the vertical height of the fault data. The vertical height can be calculated with reference to each stationary barometric pressure sensor and an average taken. It will be appreciated that further stationary barometric pressure sensors can be provided at other fixed locations on or near the inclined passenger conveyor. The provision of two or more stationary sensors provides redundancy in the system.

With reference to Figure 4, one of the associated barometric pressure sensors 372a, 372b, 372c provides a first reference pressure P(ref1) at a first known vertical height, such as its maximum height; and a second reference pressure P(ref2) at a second known vertical height, such as its minimum height. In this arrangement, since no stationary barometric pressure sensors are required, the total number of barometric pressure sensors is reduced, which results in a less complex and lower cost solution.

In a further example, not represented in the Figures, the method includes determining whether the at least one fault detection sensor 72a, 172a, 272a, 372a is moving in an upwards direction or a downwards direction. This step is achieved by receiving and analysing data from at least one acceleration sensor provided on the transportation band 12, 112, 112, 312, the moving handrail 22, 122, 222, 322 or the drive member 230, 330. The acceleration sensor providing the input for this determination may be the fault determination sensor itself or another acceleration sensor.

As the acceleration sensor provided on one of the moving components moves, the gravitational force changes at the turning points. When the inclined passenger conveyor is not moving, gravity is the only prominent (constant) acceleration, and this reference data is stored. When the moving component starts to move, it accelerates which means that the acceleration sensor is subjected to additional acceleration upwards or downwards (as a result of the movement) in addition to gravity. The change in acceleration measured by the acceleration sensor is used to determine direction of movement.

Additionally or alternatively, data from one or more of the associated barometric pressure sensors can also be analysed to determine a direction of movement: decreasing air pressure indicates upwards movement, and increasing air pressure indicates downwards movement.

Additionally or alternatively, the direction of movement can be determined by analysing the calculated vertical height over a time period, i.e. if the height decreases over time, the inclined passenger is determined to be travelling down.

It is advantageous to reduce possible external atmospheric influences and to achieve this the data from all sensors should be measured in a sufficiently small time window. (e.g. 30 seconds). A time stamp is transmitted with the data from the sensors. If the pressure measured by all the sensors is within the defined time window, then it can be said that the atmospheric pressure changes are negligible. Therefore, the pressure difference is the result of the difference in height, and the height can be determined using the Barometric formula.

While the disclosure has been described in detail in connection with only a limited number of examples, it should be readily understood that the disclosure is not limited to such disclosed examples. Rather, the disclosure can be modified to incorporate any number of variations, alterations, substitutions or equivalent arrangements not heretofore described, but which fall within the scope of the claims.

Additionally, while various examples of the disclosure have been described, it is to be understood that aspects of the disclosure may include only some of the described examples. Accordingly, the disclosure is not to be seen as limited by the foregoing description, but is only limited by the scope of the appended claims.

## Claims

1. A monitoring system (60, 160, 260, 360) for an inclined passenger conveyor (10, 110, 210, 310) having a transportation band (12, 112, 212, 312) for conveying passengers between a lower landing region (52, 152, 252, 352) and an upper landing region (54, 154, 254, 354); an endless drive member (230, 330) on which the transportation band (12, 112, 212, 312) is mounted, and at least one moving hand rail (22, 122, 222, 322);

   wherein the monitoring system (60, 160, 260, 360) comprises:

   at least one fault detection sensor (72a, 172a, 272a, 372a), provided on a movable component of the inclined passenger conveyor (10, 110, 210, 310); an associated pressure sensor (74a, 174a, 274a, 374a) provided adjacent to and associated with the or each fault detection sensor (72a, 172a, 272a, 372a); wherein the or each associated pressure sensor (74a, 174a, 274a, 374a) is configured to measure the barometric pressure at a current position of its associated fault detection sensor (72a, 172a, 272a, 372a); and a controller (80, 180, 280, 290, 390);

   wherein the controller (80, 180, 280, 290, 390) is configured to:

   receive data relating to a barometric pressure at a first defined vertical height; receive data from the at least one fault detection sensor (72a, 172a, 272a, 372a) indicative of a detected fault; and determine a fault status from the detected fault data,

**characterised in that** the controller (80, 180, 280, 290, 390) is further configured to:

   receive data from the associated pressure sensor (74a, 174a, 274a, 374a); calculate a vertical height of the detected fault data based on a comparison between the barometric pressure at the first defined vertical height and the instantaneous barometric pressure at the location of the fault data; and determine the location of the determined fault status based on the calculated vertical height,

   and **in that**
   the monitoring system (60, 160, 260, 360) further comprising a first stationary pressure sensor (70, 170, 270, 370) provided at a fixed point on the inclined passenger conveyor (10, 110, 210, 310) and configured to measure the barometric pressure at the first defined vertical height.

2. The monitoring system (60, 160, 260, 360) of claim 1, wherein the at least one fault detection sensor (72a, 172a, 272a, 372a) is provided on one of: the transportation band (12, 112, 212, 312), the endless drive member (230, 330) or the moving handrail (22, 122, 222, 322).

3. The monitoring system of any of the preceding claims, wherein at least one fault detection sensor (72a, 172a, 272a, 372a) is provided in the form of an acceleration sensor.

4. The monitoring system of any of the preceding claims, further comprising a control station (290, 390) located remotely from the inclined passenger conveyor (10, 110, 210, 310), wherein the controller (80, 180, 280, 290) is further configured to transmit data to the control station (290, 390).

5. The monitoring system (60, 160, 260, 360) of any of the preceding claims, wherein the control station (290, 390) utilises the transmitted data to predict maintenance and/or repair schedules.

6. The monitoring system (60, 160, 260, 360) of any preceding claim, wherein the controller (80, 180, 280, 380) is further configured to:

receive data relating to a barometric pressure at a second defined vertical height;

calculate the vertical height of the associated pressure sensor based on comparisons between:

the barometric pressure at the first defined vertical height and the associated pressure sensor data; and

the barometric pressure at the second defined vertical height and the associated pressure sensor data.

7. The monitoring system (60, 160, 260, 360) of any preceding claim, wherein the controller (80, 180, 280, 380) is further configured to determine whether the or each fault detection sensor (72a, 172a, 272a, 372a) is moving in an upwards direction or a downwards direction.

8. An inclined passenger conveyor (10, 110, 210, 310) comprising a monitoring system (60, 160, 260, 360) according to any of preceding claims.

9. A method of monitoring an inclined passenger conveyor (10, 110, 210, 310) having a transportation band (12, 112, 212, 312) for conveying passengers between a lower landing point (52, 152, 252, 352) and an upper landing point (54, 154, 254, 354); an endless drive member (230, 330) on which the transportation band (12, 112, 212, 312) is mounted, and at least one moving hand rail (22, 122, 222, 322); the method comprising:

- receiving data relating to a barometric pressure at a first defined vertical height;
- receiving fault data from at least one fault detection sensor (72a, 172a, 272a, 372a) provided on a moveable component of the inclined passenger conveyor (10, 110, 210, 310);
- receiving data relating to the instantaneous barometric pressure at the location of the fault data;
- calculate a vertical height of the detected fault data based on a comparison between the barometric pressure at the first defined vertical height and the instantaneous barometric pressure at the location of the fault data;
- determine a fault status from the detected fault data; and

determine a location of the determined fault status based on the calculated vertical height wherein the barometric pressure at the first defined vertical height is provided by a first stationary pressure sensor provided at the first defined vertical height on the inclined passenger conveyor and configured to measure the barometric pressure at the first defined vertical height.

10. The method of claim 9, wherein the step of receiving fault data comprises receiving fault data from at least one fault detection sensor (72a, 172a, 272a, 372a) provided on one of: the transportation band, the endless drive member (230, 330) or the moving handrail (22, 122, 222, 322).

11. The method of claim 9 or claim 10, further comprising

- receiving data relating to a barometric pressure at a second defined vertical height; and
- the step of calculating a vertical height of the detected fault data is based on comparisons between:

the barometric pressure at the first defined vertical height and the instantaneous barometric pressure at the location of the fault data; and
the barometric pressure at the second defined vertical height and the instantaneous barometric pressure at the location of the fault data.

12. The method of any of claims 9 to 11, further comprising

- determining whether the at least one fault detection sensor (72a, 172a, 272a, 372a) is moving in an upwards direction or a downwards direction.

13. The method of claim 12, further comprising

- determining a location of the detected fault on a predetermined trajectory path, based on the determination of upwards or downwards travel direction and the calculated vertical height.

14. The method of any of claims 9 to 13, further comprising

- transmitting data to a control station (290, 390) located remotely from the inclined passenger conveyor (10, 110, 210, 310).

**Patentansprüche**

1. Überwachungssystem (60, 160, 260, 360) für ein geneigtes Personenbeförderungsmittel (10, 110, 210, 310) mit einem Transportband (12, 112, 212, 312) zum Befördern von Personen zwischen einem unteren Treppenabsatzbereich (52, 152, 252, 352) und einen oberen Treppenabsatzbereich (54, 154, 254, 354); einem endlosen Antriebselement (230, 330), auf dem das Transportband (12, 112, 212, 312) montiert ist, und mindestens einem beweglichen Handlauf (22, 122, 222, 322);
wobei das Überwachungssystem (60, 160, 260, 360) Folgendes umfasst:

mindestens einen Fehlererkennungssensor (72a, 172a, 272a, 372a), der an einer beweglichen Komponente des geneigten Personenbeförderungsmittels (10, 110, 210, 310) bereitgestellt ist;
einen zugeordneten Drucksensor (74a, 174a, 274a, 374a), der neben dem oder jedem Fehlererkennungssensor (72a, 172a, 272a, 372a) bereitgestellt und diesem zugeordnet ist;
wobei der oder jeder zugeordnete Drucksensor (74a, 174a, 274a, 374a) dazu konfiguriert ist, den barometrischen Druck an einer aktuellen Position seines zugeordneten Fehlererkennungssensors (72a, 172a, 272a, 372a) zu messen; und
eine Steuerung (80, 180, 280, 290, 390);
wobei die Steuerung (80, 180, 280, 290, 390) zu Folgendem konfiguriert ist:

Empfangen von Daten bezüglich eines barometrischen Drucks an einer ersten definierten vertikalen Höhe;
Empfangen von Daten von dem mindestens einen Fehlererkennungssensor (72a, 172a, 272a, 372a), die einen erkannten Fehler angeben; und
Bestimmen eines Fehlerstatus aus den Daten zu dem erkannten Fehler, **dadurch gekennzeichnet, dass** die Steuerung (80, 180, 280, 290, 390) ferner zu Folgendem konfiguriert ist:

Empfangen von Daten von dem zugeordneten Drucksensor (74a, 174a, 274a, 374a);
Berechnen einer vertikalen Höhe der Daten zu dem erkannten Fehler basierend auf einem Vergleich zwischen dem barometrischen Druck an der ersten definierten vertikalen Höhe und dem momentanen barometrischen Druck an der Stelle der Fehlerdaten; und
Bestimmen der Stelle des bestimmten Fehlerzustands auf der Grundlage der berechneten vertikalen Höhe, und dadurch, dass das Überwachungssystem (60, 160, 260, 360) ferner einen ersten stationären Drucksensor (70, 170, 270, 370) umfasst, der an einem festen Punkt an dem geneigten Personenbeförderungsmittel (10, 110, 210, 310) bereitgestellt und dazu konfiguriert ist, den barometrischen Druck an der ersten definierten vertikalen Höhe zu messen.

2. Überwachungssystem (60, 160, 260, 360) nach Anspruch 1, wobei der mindestens eine Fehlererkennungssensor (72a, 172a, 272a, 372a) an einem von Folgenden bereitgestellt ist: dem Transportband (12, 112, 212, 312), dem endlosen Antriebselement (230, 330) oder dem beweglichen Handlauf (22, 122, 222, 322).

3. Überwachungssystem nach einem der vorhergehenden Ansprüche, wobei mindestens ein Fehlererkennungssensor (72a, 172a, 272a, 372a) in Form eines Beschleunigungssensors bereitgestellt ist.

4. Überwachungssystem nach einem der vorhergehenden Ansprüche, ferner einen Steuerstand (290, 390) umfassend, der sich von dem geneigten Personenbeförderungsmittel (10, 110, 210, 310) entfernt befindet,
wobei die Steuerung (80, 180, 280, 290) ferner dazu konfiguriert ist, Daten an den Steuerstand (290, 390) zu übermitteln.

5. Überwachungssystem (60, 160, 260, 360) nach einem der vorhergehenden Ansprüche, wobei der Steuerstand (290, 390) die übermittelten Daten verwendet, um Wartungs- und/oder Reparaturpläne vorherzusagen.

6. Überwachungssystem (60, 160, 260, 360) nach einem vorhergehenden Anspruch, wobei die Steuerung (80, 180, 280, 380) ferner zu Folgendem konfiguriert ist:

Empfangen von Daten bezüglich eines barometrischen Drucks an einer zweiten definierten vertikalen Höhe;
Berechnen der vertikalen Höhe des zugeordneten Drucksensors basierend auf Vergleichen zwischen Folgenden:

dem barometrischen Druck an der ersten definierten vertikalen Höhe und den zugehörigen Drucksensordaten; und
dem barometrischen Druck an der zweiten definierten vertikalen Höhe und den zugehörigen Drucksensordaten.

7. Überwachungssystem (60, 160, 260, 360) nach einem vorhergehenden Anspruch, wobei die Steuerung (80, 180, 280, 380) ferner dazu konfiguriert ist, zu bestimmen, ob sich der oder jeder Fehlererkennungssensor (72a, 172a, 272a, 372a) in einer Aufwärtsrichtung oder in einer Abwärtsrichtung bewegt.

8. Geneigtes Personenbeförderungsmittel (10, 110, 210, 310), umfassend ein Überwachungssystem (60, 160, 260, 360) nach einem der vorhergehenden Ansprüche.

9. Verfahren zum Überwachen eines geneigten Personenbeförderungsmittels (10, 110, 210, 310) mit einem Transportband (12, 112, 212, 312) zum Befördern von Personen zwischen einem unteren Treppenabsatzpunkt (52, 152, 252, 352) und einen oberen Treppenabsatzpunkt (54, 154, 254, 354); einem endlosen Antriebselement (230, 330), auf dem das Transportband (12, 112, 212, 312) montiert ist, und mindestens einem beweglichen Handlauf (22, 122, 222, 322);
wobei das Verfahren Folgendes umfasst:

    - Empfangen von Daten bezüglich eines barometrischen Drucks an einer ersten definierten vertikalen Höhe;
    - Empfangen von Fehlerdaten von mindestens einem Fehlererkennungssensor (72a, 172a, 272a, 372a), der an einer beweglichen Komponente des geneigten Personenbeförderungsmittels (10, 110, 210, 310) bereitgestellt ist;
    - Empfangen von Daten bezüglich des momentanen barometrischen Drucks an der Stelle der Fehlerdaten;
    - Berechnen einer vertikalen Höhe der Daten zu dem erkannten Fehler basierend auf einem Vergleich zwischen dem barometrischen Druck an der ersten definierten vertikalen Höhe und dem momentanen barometrischen Druck an der Stelle der Fehlerdaten;
    - Bestimmen eines Fehlerstatus aus den Daten zu dem erkannten Fehler; und

Bestimmen einer Stelle des bestimmten Fehlerstatus auf der Grundlage der berechneten vertikalen Höhe, wobei der barometrische Druck an der ersten definierten vertikalen Höhe von einem ersten stationären Drucksensor bereitgestellt wird, der an der ersten definierten vertikalen Höhe an dem geneigten Personenbeförderungsmittel bereitgestellt ist und dazu konfiguriert ist, den barometrischen Druck an der ersten definierten vertikalen Höhe zu messen.

10. Verfahren nach Anspruch 9, wobei der Schritt des Empfangens von Fehlerdaten Empfangen von Fehlerdaten von mindestens einem Fehlererkennungssensor (72a, 172a, 272a, 372a) umfasst, der an einem von Folgenden bereitgestellt ist: dem Transportband, dem endlosen Antriebselement (230, 330) oder dem beweglichen Handlauf (22, 122, 222, 322).

11. Verfahren nach Anspruch 9 oder Anspruch 10, ferner Folgendes umfassend

    - Empfangen von Daten bezüglich eines barometrischen Drucks an einer zweiten definierten vertikalen Höhe; und
    - wobei der Schritt des Berechnens einer vertikalen Höhe der Daten des erkannten Fehlers auf Vergleichen zwischen Folgenden basiert:

        dem barometrischen Druck an der ersten definierten vertikalen Höhe und dem momentanen barometrischen Druck an der Stelle der Fehlerdaten; und
        dem barometrischen Druck an der zweiten definierten vertikalen Höhe und dem momentanen barometrischen Druck an der Stelle der Fehlerdaten.

12. Verfahren nach einem der Ansprüche 9 bis 11, ferner Folgendes umfassend

    - Bestimmen, ob sich der mindestens eine Fehlererkennungssensor (72a, 172a, 272a, 372a) in einer Aufwärtsrichtung oder einer Abwärtsrichtung bewegt.

13. Verfahren nach Anspruch 12, ferner Folgendes umfassend

    - Bestimmen einer Stelle des erkannten Fehlers auf einer vorbestimmten Bewegungsbahn, auf der Grundlage der Bestimmung der Aufwärts- oder Abwärtsfahrtrichtung und der berechneten vertikalen Höhe.

14. Verfahren nach einem der Ansprüche 9 bis 13, ferner Folgendes umfassend

    - Übermitteln von Daten an einen Steuerstand (290, 390), der sich von dem geneigten Personenbeförderungsmittel (10, 110, 210, 310) entfernt befindet.

**Revendications**

1. Système de surveillance (60, 160, 260, 360) pour un convoyeur incliné de passagers (10, 110, 210, 310) ayant une bande de transport (12, 112, 212, 312) pour transporter des passagers entre une région de palier inférieure (52, 152, 252, 352) et une région de palier supérieure (54, 154, 254, 354) ; un élément d'entraînement sans fin (230, 330) sur lequel la bande de transport (12, 112, 212, 312) est montée, et au moins une main courante mobile (22, 122, 222, 322) ;
dans lequel le système de surveillance (60, 160, 260, 360) comprend :

    au moins un capteur de détection de défaut (72a, 172a, 272a, 372a), prévu sur un composant mobile du convoyeur incliné de passagers (10, 110, 210, 310) ;

un capteur de pression associé (74a, 174a, 274a, 374a) prévu adjacent à et associé au ou à chaque capteur de détection de défaut (72a, 172a, 272a, 372a) ;

dans lequel le ou chaque capteur de pression associé (74a, 174a, 274a, 374a) est configuré pour mesurer la pression barométrique à une position actuelle de son capteur de détection de défaut associé (72a, 172a, 272a, 372a) ; et

un dispositif de commande (80, 180, 280, 290, 390) ;

dans lequel le dispositif de commande (80, 180, 280, 290, 390) est configuré pour :

recevoir des données relatives à une pression barométrique à une première hauteur verticale définie ;

recevoir des données de l'au moins un capteur de détection de défaut (72a, 172a, 272a, 372a) indiquant un défaut détecté ; et déterminer un état de défaut à partir des données de défaut détectées, **caractérisé en ce que** le dispositif de commande (80, 180, 280, 290, 390) est en outre configuré pour :

recevoir des données du capteur de pression associé (74a, 174a, 274a, 374a) ;

calculer une hauteur verticale des données de défaut détectées sur la base d'une comparaison entre la pression barométrique à la première hauteur verticale définie et la pression barométrique instantanée à l'emplacement des données de défaut ; et

déterminer l'emplacement de l'état de défaut déterminé sur la base de la hauteur verticale calculée, et **en ce que** le système de surveillance (60, 160, 260, 360) comprenant en outre un premier capteur de pression fixe (70, 170, 270, 370) prévu en un point fixe sur le convoyeur incliné de passagers (10, 110, 210, 310) et configuré pour mesurer la pression barométrique à la première hauteur verticale définie.

2. Système de surveillance (60, 160, 260, 360) selon la revendication 1, dans lequel l'au moins un capteur de détection de défaut (72a, 172a, 272a, 372a) est prévu sur l'un parmi : la bande de transport (12, 112, 212, 312), l'élément d'entraînement sans fin (230, 330) ou la main courante mobile (22, 122, 222, 322).

3. Système de surveillance selon l'une quelconque des revendications précédentes, dans lequel au moins un capteur de détection de défaut (72a, 172a, 272a, 372a) est prévu sous la forme d'un capteur d'accélération.

4. Système de surveillance selon l'une quelconque des revendications précédentes, comprenant en outre un poste de commande (290, 390) situé à distance du convoyeur incliné de passagers (10, 110, 210, 310),
dans lequel le dispositif de commande (80, 180, 280, 290) est en outre configuré pour transmettre des données au poste de commande (290, 390).

5. Système de surveillance (60, 160, 260, 360) selon l'une quelconque des revendications précédentes, dans lequel le poste de commande (290, 390) utilise les données transmises pour prédire la maintenance et/ou les calendriers de réparation.

6. Système de surveillance (60, 160, 260, 360) selon une quelconque revendication précédente, dans lequel le dispositif de commande (80, 180, 280, 380) est en outre configuré pour :

recevoir des données relatives à une pression barométrique à une seconde hauteur verticale définie ;

calculer la hauteur verticale du capteur de pression associé sur la base des comparaisons entre :

la pression barométrique à la première hauteur verticale définie et les données de capteur de pression associées ; et
la pression barométrique à la seconde hauteur verticale définie et les données de capteur de pression associées.

7. Système de surveillance (60, 160, 260, 360) selon une quelconque revendication précédente, dans lequel le dispositif de commande (80, 180, 280, 380) est en outre configuré pour déterminer si le ou chaque capteur de détection de défaut (72a, 172a, 272a, 372a) se déplace vers le haut ou vers le bas.

8. Convoyeur incliné de passagers (10, 110, 210, 310) comprenant un système de surveillance (60, 160, 260, 360) selon l'une quelconque des revendications précédentes.

9. Système de surveillance d'un convoyeur incliné de passagers (10, 110, 210, 310) ayant une bande de transport (12, 112, 212, 312) pour transporter des passagers entre une région de palier inférieure (52, 152, 252, 352) et une région de palier supérieure (54, 154, 254, 354) ; un élément d'entraînement sans fin (230, 330) sur lequel la bande de transport (12, 112, 212, 312) est montée, et au moins une main courante mobile (22, 122, 222, 322) ;
le procédé comprenant :

- la réception de données relatives à une pression barométrique à une première hauteur verticale définie ;
- la réception de données de défaut d'au moins un capteur de détection de défaut (72a, 172a, 272a, 372a), prévu sur un composant mobile du convoyeur incliné de passagers (10, 110, 210, 310) ;
- la réception de données relatives à la pression barométrique instantanée à l'emplacement des données de défaut ;
- le calcul d'une hauteur verticale des données de défaut détectées sur la base d'une comparaison entre la pression barométrique à la première hauteur verticale définie et la pression barométrique instantanée à l'emplacement des données de défaut ; et
- la détermination d'un état de défaut à partir des données de défaut détectées ; et

la détermination d'un emplacement de l'état de défaut déterminé sur la base de la hauteur verticale calculée dans lequel la pression barométrique à la première hauteur verticale définie est fournie par un premier capteur de pression fixe prévu à la première hauteur verticale définie sur le convoyeur incliné de passagers et configuré pour mesurer la pression barométrique à la première hauteur verticale définie.

10. Procédé selon la revendication 9, dans lequel l'étape de réception de données de défaut comprend la réception de données de défaut d'au moins un capteur de détection de défaut (72a, 172a, 272a, 372a) prévu sur l'un parmi : la bande de transport, l'élément d'entraînement sans fin (230, 330) ou la main courante mobile (22, 122, 222, 322).

11. Procédé selon la revendication 9 ou la revendication 10, comprenant en outre

- la réception de données relatives à une pression barométrique à une seconde hauteur verticale définie ; et
- l'étape de calcul d'une hauteur verticale des données de défaut détectées est basée sur des comparaisons entre :

la pression barométrique à la première hauteur verticale définie et la pression barométrique instantanée à l'emplacement des données de défaut ; et
la pression barométrique à la seconde hauteur verticale définie et la pression barométrique instantanée à l'emplacement des données de défaut.

12. Procédé selon l'une quelconque des revendications 9 à 11, comprenant en outre

- le fait de déterminer si l'au moins un capteur de détection de défaut (72a, 172a, 272a, 372a) se déplace dans une direction vers le haut ou vers le bas.

13. Procédé selon la revendication 12, comprenant en outre

- la détermination d'un emplacement du défaut détecté sur un chemin de trajectoire prédéterminé, sur la base de la détermination de la direction de déplacement vers le haut ou vers le bas et de la hauteur verticale calculée.

14. Procédé selon l'une quelconque des revendications 9 à 13, comprenant en outre

- la transmission de données à un poste de commande (290, 390) situé à distance du convoyeur incliné de passagers (10, 110, 210, 310).

Figure 1

Figure 2

Figure 3

Figure 4

500

```
                    ┌─────────────┐
                    │    Start    │
                    └──────┬──────┘
                           │
                           ▼
        ┌──────────────────────────────────────┐
        │  Determine P (Ref) = barometric       │      510
        │  pressure at a first defined          │
        │  vertical height                      │
        └──────────────────┬───────────────────┘
                           │
                           ▼
        ┌──────────────────────────────────────┐
        │         Detect fault data            │      520
        │                                      │
        └──────────────────┬───────────────────┘
                           │
                           ▼
        ┌──────────────────────────────────────┐
        │  Determine P (fault) = barometric     │
        │  pressure at the location of          │      530
        │  detected fault data                  │
        └──────────────────┬───────────────────┘
                           │
                           ▼
        ┌──────────────────────────────────────┐
        │  Calculate a vertical height of the   │
        │  detected fault data, based on a      │
        │  comparison between P(ref)            │      540
        │  and P(fault)                         │
        └──────────────────┬───────────────────┘
                           │
                           ▼
        ┌──────────────────────────────────────┐
        │  Determine a location of the          │
        │  detected fault data                  │      550
        └──────────────────┬───────────────────┘
                           │
                           ▼
        ┌──────────────────────────────────────┐
        │  Determine fault status from the      │
        │  detected fault data                  │      560
        └──────────────────┬───────────────────┘
                           │
                           ▼
                    ┌─────────────┐
                    │     End     │
                    └─────────────┘
```

Figure 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 110294398 A